# EUROPÄISCHE PATENTANMELDUNG

(11) **EP 4 418 810 A1**
(43) Veröffentlichungstag der Anmeldung: **21.08.2024**
(21) Anmeldenummer: 23156788.4
(22) Anmeldetag: 15.02.2023
(51) Int. Cl.: H04W 84/12

(54) **VERFAHREN ZUR RECHNERGESTÜTZTEN ÜBERWACHUNG EINER INDUSTRIELLEN ANLAGE MITTELS EINES FUNKNETZES**

(71) Anmelder: Siemens Aktiengesellschaft, 80333 München (DE)
(72) Erfinder: Lopez Padilla, Diego Gerardo, 90459 Nürnberg (DE)
(74) Vertreter: Siemens Patent Attorneys

(57) **Zusammenfassung**

Die Erfindung betrifft Verfahren zur rechnergestützten Überwachung einer industriellen Anlage (100) mittels eines Funknetzes, wobei das Funknetz eine Vielzahl von Netzknoten (N1, N2, N3, N4) zum Aussenden und Empfang von Funksignalen in einem Raumbereich (R) umfasst, der zumindest einen Teil der industriellen Anlage (1) abdeckt, wobei im Raumbereich (R) ein oder mehrere Objekte (1, 2, 3) enthalten sind, welche eine oder mehrere Maschinen (2, 3) der industriellen Anlage (100) umfassen und einen oder mehrere Benutzer (1) umfassen können, welche sich temporär in dem Raumbereich (R) befinden, wobei zu aufeinander folgenden Zeitpunkten jeweils folgende Schritte durchgeführt werden:
a) es werden Kanalzustands-Informationen (CSI1, CSI2, CSI3) aus den Funksignalen ermittelt und Eingangsdaten (IN), welche auf den Kanalzustands-Informationen basieren, einem datengetriebenen Modell (NN) zugeführt;
b) das datengetriebene Modell (NN) generiert Ausgangsdaten (OU), die angeben, welche Objekte (1, 2, 3) im Raumbereich (R) vorhanden sind und welche Eigenschaften (PR) die vorhandenen Objekte aufweisen, wobei die Eigenschaften (PR) eines vorhandenen Objekts seinen Objekttyp (OT), seine Position (PO), seine Bewegungsgeschwindigkeit (MV), seine Bewegungsrichtung (MD) und seine Abmessungen (DI) umfassen;
c) basierend auf den Ausgangsdaten (OU) werden ein oder mehrere Zustandsparameter (PA) in Bezug auf ein oder mehrere im Raumbereich (R) vorhandene Objekte (1, 2, 3) ermittelt.

## Beschreibung

Aus dem Stand der Technik sind Verfahren bekannt, mit denen Objekte bzw. deren Bewegung in einem Raumbereich über die Auswertung von Funksignalen eines Funknetzes detektiert werden. Dabei werden die sog. Kanalzustands-Informationen in den Funksignalen des Funknetzes analysiert. Diese Kanalzustands-Informationen geben Rückschlüsse auf Veränderungen in der Signalausbreitung der Funksignale, z.B. ausgelöst durch Streuung und Reflexionen an Objekten, worüber Informationen über entsprechende Objekte bzw. deren Bewegung gewonnen werden können.

Eine besonders genaue Lokalisation von Objekten über ein Funknetz wird durch sog. WiFi-Sensing ermöglicht. Diese Technologie kombiniert WLAN-Funksignale mit Radarsensor-Technologie. WiFi-Sensing beruht auf dem Standard IEEE 802.11bf, der sich noch in der Entwicklung befindet.

Obwohl WiFi-Sensing eine hochgenaue Detektion von Objekten ermöglicht, gibt es bislang noch keine Ansätze, wie eine auf Funksignalen basierende Ortung im Rahmen der Überwachung einer industriellen Anlage effizient genutzt werden kann.

Aufgabe der Erfindung ist es, eine präzise und zuverlässige Überwachung einer industriellen Anlage mittels eines Funknetzes bereitzustellen.

Diese Aufgabe wird durch das Verfahren gemäß Patentanspruch 1 gelöst. Weiterbildungen der Erfindung sind in den abhängigen Ansprüchen definiert.

Im Rahmen des erfindungsgemäßen Verfahrens wird zur Überwachung einer industriellen Anlage ein Funknetz genutzt, das eine Vielzahl von Netzknoten zum Aussenden und Empfang von Funksignalen in einem Raumbereich umfasst, der zumindest einen Teil der industriellen Anlage abdeckt. Im Raumbereich sind ein oder mehrere Objekte enthalten, welche eine oder mehrere Maschinen der industriellen Anlage umfassen. Zumindest ein Teil der Maschinen kann gegebenenfalls auch nur temporär in der industriellen Anlage vorhanden sein. Dies ist insbesondere dann der Fall, wenn sich die entsprechende Maschine selbsttätig im Raumbereich bewegen kann. Neben den Maschinen können als Objekte ein oder mehrere menschliche Benutzer im Raumbereich auftreten. Diese Benutzer befinden sich temporär im Raumbereich, um z.B. bestimmte Arbeitstätigkeiten in der industriellen Anlage durchzuführen.

Im Rahmen des erfindungsgemäßen Verfahrens werden zu aufeinander folgenden Zeitpunkten und vorzugsweise in regelmäßigen Zeitabständen jeweils die nachfolgend beschriebenen Schritte a) bis c) durchgeführt.

In Schritt a) werden Kanalzustands-Informationen aus den Funksignalen ermittelt und Eingangsdaten, welche auf den Kanalzustands-Informationen basieren, einem datengetriebenen Modell zugeführt, das mittels maschinellen Lernens gelernt ist.

In Schritt b) generiert das datengetriebene Modell eine Ausgabe bzw. Ausgangsdaten, die angeben, welche Objekte im Raumbereich vorhanden sind und welche Eigenschaften die vorhandenen Objekte aufweisen. Die Eigenschaften eines vorhandenen Objekts umfassen dabei seinen Objekttyp, seine Position, seine Bewegungsgeschwindigkeit, seine Bewegungsrichtung und seine Abmessungen.

In einem Schritt c) des erfindungsgemäßen Verfahrens werden basierend auf den obigen Ausgangsdaten ein oder mehrere Zustandsparameter in Bezug auf ein oder mehrere im Raumbereich vorhandene Objekte ermittelt.

Das erfindungsgemäße Verfahren ermöglicht durch die Verarbeitung von Kanalzustands-Informationen von Funksignalen mittels eines datengetriebenen Modells die Extraktion einer Vielzahl von Eigenschaften von Objekten innerhalb einer industriellen Anlage. Im Besonderen werden dabei wichtige Merkmale des Objekts in der Form seines Typs, seiner Position, seiner Bewegungsgeschwindigkeit und Bewegungsrichtung sowie seiner Abmessungen bestimmt. Mit diesen Informationen werden dann Zustandsparameter in Bezug auf Objekte in der industriellen Anlage gewonnen. Diese Zustandsparameter ermöglichen eine zielgerichtete Überwachung der industriellen Anlage.

In einer bevorzugten Ausführungsform basiert das Funknetz zur Überwachung der industriellen Anlage auf WLAN (WLAN = Wireless Local Area Network), d.h. auf einem Standard aus der Standardfamilie IEEE 802.11. In einer besonders bevorzugten Variante verwendet das Funknetz WiFi-Sensing, das bereits oben erwähnt wurde.

In einer besonders bevorzugten Ausführungsform des erfindungsgemäßen Verfahrens enthalten die Eigenschaften eines vorhandenen Objekts zumindest eines Teils der vorhandenen Objekte neben den oben genannten Eigenschaften ferner eine eindeutige Identifikation des vorhandenen Objekts. Es kann somit nicht nur der Objekttyp festgestellt werden, sondern auch die Identität des Objekts eindeutig ermittelt werden. Zum Beispiel kann die Identität entsprechender im Raumbereich vorhandener Maschinen (z.B. basierend auf deren Seriennummern) oder die Identität entsprechender Benutzer im Raumbereich festgestellt werden.

In einer weiteren bevorzugten Variante spezifizieren die Eigenschaften eines vorhandenen Objekts zumindest eines Teils der vorhandenen Objekte ferner Positionen, Bewegungsgeschwindigkeiten und Bewegungsrichtungen von Objektteilen relativ zu einem Bezugspunkt am Objekt. Es wird somit nicht nur die absolute Position von Objekten ermittelt, sondern auch die relative Position von Objektteilen, wodurch eine verbesserte Überwachung der Objekte erreicht werden kann.

In einer weiteren, besonders bevorzugten Ausführungsform enthalten der oder die Zustandsparameter, die in Schritt c) des erfindungsgemäßen Verfahrens ermittelt werden, eine oder mehrere Größen, welche die Performanz einer im Raumbereich vorhandenen Maschine beschreiben und/oder eine Information spezifizieren, ob eine Wartung für eine im Raumbereich vorhandene Maschine erforderlich ist. Unter einer Performanz ist dabei jede beliebige Größe zu verstehen, welche sich auf die Arbeitsqualität und/oder die Arbeitsgeschwindigkeit einer entsprechenden Maschine bezieht.

In einer weiteren bevorzugten Ausführungsform spezifizieren der oder die Zustandsparameter, die in Schritt c) des erfindungsgemäßen Verfahrens ermittelt werden, die Körperhaltung von einem oder mehreren Benutzern im Raumbereich. Diese Information kann z.B. über eine Benutzerschnittstelle ausgegeben werden, um einen Benutzer auf unergonomische Körperhaltungen hinzuweisen. Ferner können gegebenenfalls Maßnahmen ergriffen werden, um die Anordnung von Maschinen bzw. deren Bedienung zu verbessern, so dass die Benutzer eine bessere ergonomische Haltung im Rahmen ihrer Tätigkeit in der industriellen Anlage einnehmen.

In einer weiteren bevorzugten Ausführungsform enthalten der oder die Zustandsparameter, die in Schritt c) des erfindungsgemäßen Verfahrens ermittelt werden, für ein oder mehrere vorbestimmte Ereignisse jeweils eine oder mehrere Größen, die angeben, ob das jeweilige vorbestimmte Ereignis in der industriellen Anlage eingetreten ist, wobei im Falle des Eintretens des jeweiligen vorbestimmten Ereignisses eine oder mehrere vorbestimmte Aktionen in der industriellen Anlage ausgelöst werden. Auf diese Weise kann die Überwachung der industriellen Anlage sehr gut an bestimmte Ereignisse gekoppelt werden.

In einer bevorzugten Variante der soeben beschriebenen Ausführungsform ist ein vorbestimmtes Ereignis aus dem oder den vorbestimmten Ereignissen das Vorhandensein einer vorgegebenen Maschine im Raumbereich oder die Ausführung einer Bewegung durch eine vorgegebene im Raumbereich vorhandene Maschine. Dabei umfassen die vorbestimmte Aktion oder vorbestimmten Aktionen eine Maßnahme, welche dem Eintritt von Benutzern in ein vorgegebenes räumliches Umfeld um die vorgegebene Maschine entgegenwirken. Mit dieser Variante wird die Gefahr von Unfällen von Benutzern durch Wechselwirkung mit Maschinen verringert. Je nach Ausgestaltung können die Maßnahmen unterschiedlich sein. Beispielsweise kann eine Maßnahme darin bestehen, dass eine Warnmeldung ausgegeben wird, sobald ein Benutzer in das vorgegebene räumliche Umfeld eintritt.

In einer weiteren bevorzugten Ausgestaltung ist ein vorbestimmtes Ereignis aus dem oder den vorbestimmten Ereignissen das Auftreten einer Kollisionsgefahr eines Benutzers mit einer sich bewegenden Maschine im Raumbereich, wobei die vorbestimmte Aktion oder vorbestimmten Aktionen die Ausgabe einer Warnung an den Benutzer und/oder das Anhalten der sich bewegenden Maschine umfassen. Hierdurch können Kollisionen zwischen Benutzern und sich bewegenden Maschinen sehr gut verhindert werden.

Das im erfindungsgemäßen Verfahren genutzte datengetriebene Modell kann unterschiedlich ausgestaltet sein. In einer besonders bevorzugten Ausgestaltungsform wird als datengetriebenes Modell eine neuronale Netzstruktur aus einem oder mehreren neuronalen Netzen verwendet. Neuronale Netze sind sehr gut durch maschinelles Lernen zu trainieren.

In einer weiteren bevorzugten Variante des erfindungsgemäßen Verfahrens werden die Kanalzustands-Informationen, die in Schritt a) des erfindungsgemäßen Verfahrens ermittelt werden, zusammen mit den Ausgangsdaten des datengetriebenen Modells als Daten an eine zentrale Stelle übermittelt, welche diese Daten als Trainingsdaten zum Lernen eines datengetriebenen Modells einer anderen industriellen Anlage bereitstellt. Hierdurch können effizient die datengetriebenen Modelle verschiedener industrieller Anlagen über die Bereitstellung von Trainingsdaten verbessert werden.

Neben dem oben beschriebenen Verfahren betrifft die Erfindung eine Vorrichtung zur rechnergestützten Überwachung einer industriellen Anlage mittels eines Funknetzes, wobei die Vorrichtung dazu eingerichtet ist, das erfindungsgemäße Verfahren bzw. eine oder mehrere bevorzugte Varianten des erfindungsgemäßen Verfahrens durchzuführen. Mit anderen Worten enthält die Vorrichtung entsprechende Mittel zur Durchführung des erfindungsgemäßen Verfahrens bzw. einer oder mehrerer bevorzugter Varianten des erfindungsgemäßen Verfahrens.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ferner betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

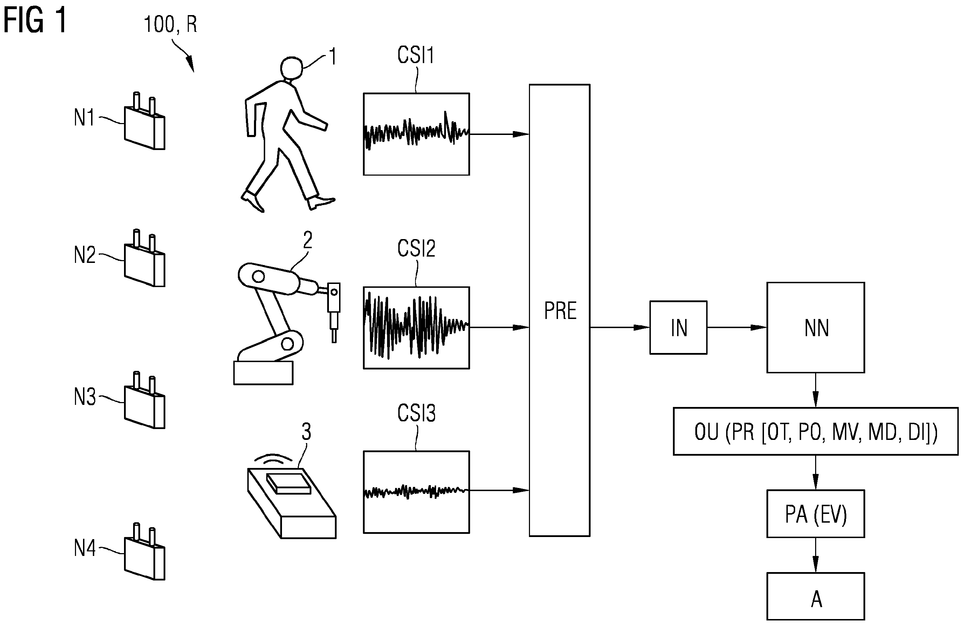

Ein Ausführungsbeispiel der Erfindung wird nachfolgend anhand der beigefügten Fig. 1 detailliert beschrieben. Diese Figur zeigt eine schematische Darstellung, basierend auf welcher eine Variante des erfindungsgemäßen Verfahrens erläutert wird.

Gemäß Fig. 1 wird die hier beschriebene Ausführungsform des erfindungsgemäßen Verfahrens für eine industrielle Anlage 100 eingesetzt, die in einem Raumbereich R installiert ist. Die Anlage ist nur schematisch wiedergegeben. Insbesondere sind von der Anlage lediglich eine Maschine 2 in der Form eines Roboters sowie eine weitere Maschine 3 in der Form eines selbstfahrenden Fahrzeugs wiedergegeben. Die industrielle Anlage enthält dabei eine Vielzahl entsprechender Maschinen 2 und 3. Darüber hinaus ist im Raumbereich R der industriellen Anlage 100 ein menschlicher Benutzer 1 anwesend, der als Arbeiter vorbestimmte Aufgaben innerhalb der industriellen Anlage durchführt. In der Regel sind im Raumbereich der industriellen Anlage mehrere Benutzer gleichzeitig tätig. Der Benutzer 1 und die Maschinen 2 und 3 stellen Objekte im Raumbereich der industriellen Anlage dar.

In der industriellen Anlage 100 ist ferner ein Funknetz aus mehreren Netzknoten N1, N2, N3 und N4 installiert. Jeder Netzknoten dient sowohl zum Aussenden als auch zum Empfang von Funkwellen innerhalb des Funknetzes. Die Netzknoten N1 bis N4 verwenden vorzugsweise WiFi-Sensing gemäß dem Standard IEEE 802.11bf. WiFi-Sensing wurde bereits weiter oben erläutert. Mittels dieser Technologie wird eine hochgenaue Lokalisation der Objekte innerhalb des Raumbereichs R zusammen mit der Erfassung von Eigenschaften der Objekte ermöglicht. Diese Informationen werden aus den an sich bekannten Kanalzustands-Informationen der zwischen den Netzknoten übertragenen Funkwellen ermittelt, wobei die Kanalzustands-Informationen durch das Vorhandensein entsprechender Objekte verändert werden.

Beispielhaft sind in Fig. 1 eine Kanalzustands-Information CSI1 für den menschlichen Benutzer 1, eine Kanalzustands-Information CSI2 für den Roboter 2 sowie eine Kanalzustands-Information CSI3 für das selbstfahrende Fahrzeug 3 wiedergegeben. Diese Kanalzustands-Informationen werden von den jeweiligen Netzknoten an einen zentralen Rechner (nicht gezeigt) übermittelt und dort in einem ersten Schritt einer Vorverarbeitung PRE unterzogen. Gemäß dieser Vorverarbeitung wird aus den entsprechenden Kanalzustands-Informationen die Wellenform und die Abtastrate gewonnen. Die vorverarbeiteten Daten werden anschließend als Eingangsdaten IN einem datengetriebenen Modell in der Form eines neuronalen Netzes NN zugeführt.

In der hier beschriebenen Ausführungsform liefert das neuronale Netz NN als Ausgangsdaten bzw. Ausgabe OU die Information über die im Raumbereich vorhandenen Objekte, die im dargestellten Ausführungsbeispiel den Benutzer 1, den Roboter 2 sowie das selbstfahrende Fahrzeug 3 umfassen. Darüber hinaus wird eine Vielzahl von Eigenschaften PR von den einzelnen Objekten 1, 2 und 3 gewonnen.

In der hier beschriebenen Ausführungsform umfassen die Eigenschaften für das jeweilige vorhandene Objekt die Information über seinen Objekttyp OT, seine Position PO, seine Bewegungsgeschwindigkeit MV, seine Bewegungsrichtung MD sowie seine Abmessungen DI. Die Bewegungsgeschwindigkeit MV und die Bewegungsrichtung MD sind gegebenenfalls auf null gesetzt, sofern sich das entsprechende Objekt nicht bewegt. Der Objekttyp OT kann unterschiedlich granular festgelegt werden. Beispielsweise kann der Objekttyp spezifizieren, ob das Objekt ein menschlicher Benutzer 1, ein Roboter 2 oder ein selbstfahrendes Fahrzeug 3 ist. Gegebenenfalls ist es sogar möglich, dass exakt spezifiziert wird, welches vorab registrierte Objekt gerade im Raumbereich vorhanden ist, z.B. kann genau spezifiziert werden, welcher Benutzer im Raumbereich Arbeiten ausführt bzw. welches selbstfahrende Fahrzeug sich gerade im Raumbereich bewegt.

Das datengetriebene Modell bzw. neuronale Netz NN wurde vorab in an sich bekannter Weise mit Trainingsdaten im Rahmen eines überwachten Lernens gelernt. Mit anderen Worten wurden im Rahmen des Trainings bzw. Lernens dem neuronalen Netz Eingangsdaten zugeführt, von denen bekannt war, zu welchen Objekten mit welchen Eigenschaften diese Eingangsdaten gehören. Mit anderen Worten waren die Ausgangsdaten zu den entsprechenden Eingangsdaten im Rahmen des Lernens des neuronalen Netzes vorbekannt. Das neuronale Netz wurde dabei derart trainiert, dass beim Zuführen der entsprechenden Eingangsdaten auch in der Tat die Ausgangsdaten gemäß den Trainingsdaten durch das neuronale Netz erzeugt wurden.

Basierend auf den Ausgangsdaten OU des neuronalen Netzes NN werden schließlich Zustandsparameter PA in Bezug auf die im Raumbereich R vorhandenen Objekte ermittelt, wobei in einer Variante des erfindungsgemäßen Verfahrens die Zustandsparameter angeben, ob ein vorbestimmtes Ereignis EV in der industriellen Anlage eingetreten ist. Ist dies der Fall, werden eine oder mehrere vorbestimmte Aktionen A in der industriellen Anlage ausgelöst. Es ist gegebenenfalls auch möglich, dass zumindest ein Teil der Zustandsparameter nicht den Eintritt eines Ereignisses mit daran gekoppelter Aktion beschreibt. In einer einfachen Variante des erfindungsgemäßen Verfahrens können entsprechende Zustandsparameter auch lediglich gespeichert bzw. zur Überwachung der industriellen Anlage an einer Benutzerschnittstelle ausgegeben werden.

Im Folgenden werden mehrere Szenarien erläutert, welche Bespiele von Zustandsparametern PA beschreiben, die aus den Ausgangsdaten OU ermittelt werden können und die ggf. an Ereignisse bzw. Aktionen gekoppelt sein können.

In einem ersten Szenario geben die Zustandsparameter an, ob ein vorbestimmter Roboter eine Bewegung ausführt, wobei die Bewegung nicht unbedingt die Bewegung des Roboters als Ganzes sein muss, sondern gegebenenfalls auch nur eine Bewegung von Bauteilen des Roboters relativ zu einem Bezugskoordinatensystem des Roboters sein kann. Wird eine solche Bewegung als Ereignis EV detektiert, wird in dem hier beschriebenen Szenario als Aktion A eine Maßnahme ergriffen, welche dem Eintritt eines Benutzers in ein vorgegebenes räumliches Umfeld um den Roboter entgegenwirkt. Beispielsweise kann das vorgegebene räumliche Umfeld sensorisch überwacht werden, wobei als Maßnahme eine deutlich wahrnehmbare Warnmeldung ausgegeben wird, sobald ein Benutzer das entsprechende räumliche Umfeld betritt.

In einem zweiten Szenario geben die Zustandsparameter an, ob eine Kollisionsgefahr zwischen einem Benutzer und einem selbstfahrenden Fahrzeug besteht. Die Kollisionsgefahr kann beispielsweise dadurch gegeben sein, dass sich die Bewegungsrichtungen des Benutzers und des selbstfahrenden Fahrzeugs kreuzen und ein vorbestimmter Abstand zwischen Benutzer und Fahrzeug unterschritten wird. Auch in diesem Fall kann als vorbestimmte Aktion z.B. eine Warnmeldung an den Benutzer ausgegeben werden. Alternativ oder zusätzlich besteht auch die Möglichkeit, dass die Bewegung des selbstfahrenden Fahrzeugs gestoppt wird, um eine Kollision zu verhindern.

In einem dritten Szenario beschreiben die Zustandsparameter die Performanz einer oder gegebenenfalls auch mehrerer Maschinen in der industriellen Anlage. Die Performanz kann beispielsweise angeben, wie viele Produkte in einer bestimmten Zeitperiode durch die Maschine hergestellt werden. Diese Information kann zur späteren Analyse geeignet gespeichert werden bzw. gegebenenfalls auch über eine Benutzerschnittstelle ausgegeben werden.

In einem vierten Szenario geben die Zustandsparameter an, inwieweit eine vorgegebene Maschine eine Wartung benötigt. Diese Information kann gegebenenfalls auch aus der oben beschriebenen Performanz der Maschine gewonnen werden. Das heißt, sollte die Performanz der Maschine abnehmen, kann hieran auch die Information gekoppelt sein, dass eine Wartung für die vorgegebene Maschine erforderlich ist.

In einem fünften Szenario geben die Zustandsparameter die Körperhaltung entsprechender Benutzer im Raumbereich R an. Anschließend können diese Daten analysiert werden, um zu ermitteln, inwieweit der jeweilige Benutzer ergonomische Haltungen einnimmt. Diese Information kann z.B. über eine Benutzerschnittstelle ausgegeben werden, um Benutzer auf eine ungünstige nicht-ergonomische Haltung hinzuweisen. Gegebenenfalls können auch Maßnahmen in der industriellen Anlage ergriffen werden, um die ergonomische Haltung von Benutzern bei Ausführung ihrer Tätigkeiten in der industriellen Anlage zu verbessern.

In einer bevorzugten Variante des erfindungsgemäßen Verfahrens können entsprechende Ausgangsdaten OU mit den zugehörigen Eingangsdaten IN an eine zentrale Stelle, wie z.B. einen zentralen Rechner, übermittelt werden. Diese Daten werden dann von der zentralen Stelle an andere industrielle Anlagen mit einem dort verwendeten neuronalen Netz verteilt, um die Daten als Trainingsdaten im Rahmen des Lernens des neuronalen Netzes zu nutzen.

Die im Vorangegangenen beschriebenen Ausführungsformen der Erfindung weisen eine Reihe von Vorteilen auf. Insbesondere können hochgenau mit Hilfe von WiFi-Sensing in Kombination mit einem datengetriebenen Modell entsprechende Eigenschaften von Objekten in einer industriellen Anlage bestimmt werden. Hierdurch kann eine zuverlässige Überwachung der Objekte in der industriellen Anlage durchgeführt werden. Im Besonderen können beim Auftreten bestimmter Ereignisse auch Aktionen in der industriellen Anlage ausgelöst werden, um z.B. Unfällen zwischen Benutzern und Maschinen in der Anlage vorzubeugen.

Die Erfindung benötigt keine zusätzliche Hardware, sondern es können herkömmliche Netzknoten eines WiFi- bzw. WLAN-Funknetzes genutzt werden, ohne dass Maschinen bzw. Benutzer im Raumbereich der industriellen Anlage mit entsprechenden Antennen ausgestattet werden müssen. Die Verwendung von WLAN hat ferner den Vorteil, dass das System auch in kompletter Dunkelheit funktioniert und die WLAN-Signale auch durch Wände hindurchgehen, so dass eine hochgenaue Lokalisation unabhängig von der Tageszeit und den räumlichen Gegebenheiten gewährleistet wird.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur rechnergestützten Überwachung einer industriellen Anlage (100) mittels eines Funknetzes, wobei das Funknetz eine Vielzahl von Netzknoten (N1, N2, N3, N4) zum Aussenden und Empfang von Funksignalen in einem Raumbereich (R) umfasst, der zumindest einen Teil der industriellen Anlage (1) abdeckt, wobei im Raumbereich (R) ein oder mehrere Objekte (1, 2, 3) enthalten sind, welche eine oder mehrere Maschinen (2, 3) der industriellen Anlage (100) umfassen und einen oder mehrere Benutzer (1) umfassen können, welche sich temporär in dem Raumbereich (R) befinden, wobei zu aufeinander folgenden Zeitpunkten jeweils folgende Schritte durchgeführt werden:
a) es werden Kanalzustands-Informationen (CSI1, CSI2, CSI3) aus den Funksignalen ermittelt und Eingangsdaten (IN), welche auf den Kanalzustands-Informationen (CSI1, CSI2, CSI3) basieren, einem datengetriebenen Modell (NN) zugeführt, das mittels maschinellen Lernens gelernt ist;
b) das datengetriebene Modell (NN) generiert Ausgangsdaten (OU), die angeben, welche Objekte (1, 2, 3) im Raumbereich (R) vorhanden sind und welche Eigenschaften (PR) die vorhandenen Objekte (1, 2, 3) aufweisen, wobei die Eigenschaften (PR) eines vorhandenen Objekts (1, 2, 3) seinen Objekttyp (OT), seine Position (PO), seine Bewegungsgeschwindigkeit (MV), seine Bewegungsrichtung (MD) und seine Abmessungen (DI) umfassen;
c) basierend auf den Ausgangsdaten (OU) werden ein oder mehrere Zustandsparameter (PA) in Bezug auf ein oder mehrere im Raumbereich (R) vorhandene Objekte (1, 2, 3) ermittelt.

2. Verfahren nach Anspruch 1, **dadurch gekennzeichnet, dass** das Funknetz auf WLAN und insbesondere WiFi-Sensing basiert.

3. Verfahren nach Anspruch 1 oder 2, **dadurch gekennzeichnet, dass** die Eigenschaften (PR) eines vorhandenen Objekts (1, 2, 3) zumindest eines Teils der vorhandenen Objekte (1, 2, 3) ferner eine eindeutige Identifikation des vorhandenen Objekts (1, 2, 3) enthalten.

4. Verfahren nach einem der vorhergehenden Ansprüche, **dadurch gekennzeichnet, dass** die Eigenschaften (PR) eines vorhandenen Objekts (1, 2, 3) zumindest eines Teils der vorhandenen Objekte (1, 2, 3) ferner Positionen, Bewegungsgeschwindigkeiten und Bewegungsrichtungen von Objektteilen relativ zu einem Bezugspunkt am Objekt (1, 2, 3) spezifizieren.

5. Verfahren nach einem der vorhergehenden Ansprüche, **dadurch gekennzeichnet, dass** der oder die Zustandsparameter (PA) eine oder mehrere Größen enthalten, welche die Performanz zumindest einer im Raumbereich (R) vorhandenen Maschine (2, 3) beschreiben und/oder eine Information spezifizieren, ob eine Wartung für zumindest eine im Raumbereich (R) vorhandene Maschine (2, 3) erforderlich ist.

6. Verfahren nach einem der vorhergehenden Ansprüche, **dadurch gekennzeichnet, dass** der oder die Zustandsparameter (PA) die Körperhaltung von einem oder mehreren Benutzern (1) im Raumbereich spezifizieren.

7. Verfahren nach einem der vorhergehenden Ansprüche, **dadurch gekennzeichnet, dass** der oder die Zustandsparameter (PA) für ein oder mehrere vorbestimmte Ereignisse (EV) jeweils eine oder mehrere Größen enthalten, die angeben, ob das jeweilige vorbestimmte Ereignis (EV) in der industriellen Anlage (100) eingetreten ist, wobei im Falle des Eintretens des jeweiligen vorbestimmten Ereignisses (EV) eine oder mehrere vorbestimmte Aktionen (A) in der industriellen Anlage (100) ausgelöst werden.

8. Verfahren nach Anspruch 7, **dadurch gekennzeichnet, dass** ein vorbestimmtes Ereignis (EV) aus dem oder den vorbestimmten Ereignissen (EV) das Vorhandensein einer vorgegebenen Maschine (2, 3) im Raumbereich oder die Ausführung einer Bewegung durch eine vorgegebene im Raumbereich vorhandene Maschine (2, 3) ist, wobei die vorbestimmte Aktion oder vorbestimmten Aktionen (A) eine Maßnahme umfassen, welche dem Eintritt von Benutzern (1) in ein vorgegebenes räumliches Umfeld um die vorgegebene Maschine (2, 3) entgegenwirken.

9. Verfahren nach Anspruch 7 oder 8, **dadurch gekennzeichnet, dass** ein vorbestimmtes Ereignis (EV) aus dem oder den vorbestimmten Ereignissen (EV) das Auftreten einer Kollisionsgefahr eines Benutzers (1) mit einer sich bewegenden Maschine (3) im Raumbereich (R) ist, wobei die vorbestimmte Aktion oder vorbestimmten Aktionen (A) die Ausgabe einer Warnung an den Benutzer (1) und/oder das Anhalten der sich bewegenden Maschine (3) umfassen.

10. Verfahren nach einem der vorhergehenden Ansprüche, **dadurch gekennzeichnet, dass** das datengetriebene Modell (NN) eine neuronale Netzstruktur aus einem oder mehreren neuronalen Netzen ist.

11. Verfahren nach einem der vorhergehenden Ansprüche, die Kanalzustands-Informationen (CSI1, CSI2, CSI3) zusammen mit den Ausgangsdaten (OU) des datengetriebenen Modells (NN) als Daten an eine zentrale Stelle übermittelt werden, welche diese Daten als Trainingsdaten zum Lernen eines datengetriebenen Modells einer anderen industriellen Anlage bereitstellt.

12. Vorrichtung zur rechnergestützten Überwachung einer industriellen Anlage (100) mittels eines Funknetzes, wobei das Funknetz eine Vielzahl von Netzknoten (N1, N2, N3, N4) zum Aussenden und Empfang von Funksignalen in einem Raumbereich (R) umfasst, der zumindest einen Teil der industriellen Anlage (1) abdeckt, wobei im Raumbereich (R) ein oder mehrere Objekte (1, 2, 3) enthalten sind, welche eine oder mehrere Maschinen (2, 3) der industriellen Anlage (100) umfassen und einen oder mehrere Benutzer (1) umfassen können, welche sich temporär in dem Raumbereich (R) befinden, wobei die Vorrichtung Mittel umfasst, um zu aufeinander folgenden Zeitpunkten jeweils folgende Schritte durchzuführen:
a) es werden Kanalzustands-Informationen (CSI1, CSI2, CSI3) aus den Funksignalen ermittelt und Eingangsdaten (IN), welche auf den Kanalzustands-Informationen (CSI1, CSI2, CSI3) basieren, einem datengetriebenen Modell (NN) zugeführt, das mittels maschinellen Lernens gelernt ist;
b) das datengetriebene Modell (NN) generiert Ausgangsdaten (OU), die angeben, welche Objekte (1, 2, 3) im Raumbereich (R) vorhanden sind und welche Eigenschaften (PR) die vorhandenen Objekte (1, 2, 3) aufweisen, wobei die Eigenschaften (PR) eines vorhandenen Objekts (1, 2, 3) seinen Objekttyp (OT), seine Position (PO), seine Bewegungsgeschwindigkeit (MV), seine Bewegungsrichtung (MD) und seine Abmessungen (DI) umfassen;
c) basierend auf den Ausgangsdaten (OU) werden ein oder mehrere Zustandsparameter (PA) in Bezug auf ein oder mehrere im Raumbereich (R) vorhandene Objekte (1, 2, 3) ermittelt.

13. Vorrichtung nach Anspruch 12, **dadurch gekennzeichnet, dass** die Vorrichtung zur Durchführung eines Verfahrens nach einem der Ansprüche 2 bis 11 eingerichtet ist.

14. Computerprogrammprodukt mit einem auf einem maschinenlesbaren Träger gespeicherten Programmcode zur Durchführung eines Verfahrens nach einem der Ansprüche 1 bis 11, wenn der Programmcode auf einem Rechner ausgeführt wird.

15. Computerprogramm mit einem Programmcode zur Durchführung eines Verfahrens nach einem der Ansprüche 1 bis 11, wenn der Programmcode auf einem Rechner ausgeführt wird.
